Europäisches Patentamt

European Patent Office

Office européen des brevets

(19)

(11) Veröffentlichungsnummer : **0 108 434**
**B1**

(12) **EUROPÄISCHE PATENTSCHRIFT**

(45) Veröffentlichungstag der Patentschrift :
07.05.86

(21) Anmeldenummer : 83201419.5

(22) Anmeldetag : 04.10.83

(51) Int. Cl.⁴ : **H 02 K   5/04,** H 02 K   5/15

(54) **Elektromotor.**

(30) Priorität : 07.10.82 AT 3708/82

(43) Veröffentlichungstag der Anmeldung :
16.05.84 Patentblatt 84/20

(45) Bekanntmachung des Hinweises auf die Patenterteilung : 07.05.86 Patentblatt 86/19

(84) Benannte Vertragsstaaten :
DE FR GB IT

(56) Entgegenhaltungen :
DE-B- 1 278 598
FR-A- 2 124 294
GB-A- 1 116 239
GB-A- 1 358 219

(73) Patentinhaber : N.V. Philips' Gloeilampenfabrieken
Groenewoudseweg 1
NL-5621 BA Eindhoven (NL)

(72) Erfinder : Eckel, Merowech
p/A INT. OCTROOIBUREAU B.V. Prof. Holstlaan 6
NL-5656 AA Eindhoven (NL)

(74) Vertreter : Gorter, Willem Karel et al
INTERNATIONAAL OCTROOIBUREAU B.V. Prof. Holstlaan 6
NL-5656 AA Eindhoven (NL)

## Beschreibung

Die Erfindung betrifft einen Elektromotor mit einem U-förmigen Statorblechpaket, dessen beide Schenkel je eine Erregerwicklung tragen, einem auf einer Motorwelle sitzenden Läufer und zwei Lagerschilden, die zur Lagerung der Motorwelle und als Montage-einrichtungen für den Motor vorgesehen sind, mit einem Lagerschild, das mit mindestens drei schwertförmigen, senkrecht zum Lagerschild verlaufenden Ansätzen versehen ist, wobei mindestens zwei Ansätze, in bezug auf die Motorwelle im wesentlichen einander gegenüberliegend angeordnet sind und ein dritter Ansatz zwischen den beiden Schenkeln des Statorblechpaketes im Bereich neben dem Läufer angeordnet ist und in bezug auf seine Breitseiten quer zur Längserstreckung der beiden Schenkel des Statorblechpaketes verläuft, wobei ferner mit dem dritten Ansatz ein T-förmiger Steg verbunden ist, der mit seinem Längssteg von der vom Läufer (2) abgewandten Breitseite des dritten Ansatzes auskragend zwischen den Erregerwicklungen verläuft und mit seinem Quersteg am die beiden Schenkel verbindenden Joch des Statorblechpaketes von der Innenseite her anliegt wobei der dritte Ansatz mit seinen beiden Schmalseiten je am benachbarten Schenkel des Statorblechpaketes von der Innenseite her anliegt.

Ein derartiger Motor, der vielfach als Antriebseinrichtung für kleine Haushaltgeräte verwendet wird, ist in der GB-PS 1 116 239 angegeben. Bei diesem bekannten Motor sind beide Lagerschilde auf dem Statorblechpaket positioniert, was die Ausbildung dieser Teile verwickelt und die Montage aufwendig macht.

Die Erfindung hat sich zum Ziel gesetzt, für einen Elektromotor der eingangs angeführten Gattung Massnahmen anzugeben, die eine besonders einfache Montage des Motors gewährleisten, wobei mit möglichst wenigen Einzelteilen das Auslangen gefunden wird, so dass sich eine solche Montage besonders gut für eine Serienfertigung mit grossen Stückzahlen, insbesondere in Form einer vollmechanisierten Montage, eignet. Erfindungsgemäss ist hierzu vorgesehen, dass die beiden erstegenannten Ansätze die Schenkel des Statorblechpaketes an deren Aussenseite umfassen und mit einer Breitseite an den Schenkel des Statorblechpaketes anliegen und das zweite Lagerschild mit zu den Ansätzen korrespondierenden Öffnungen versehen ist, durch welche die freien Enden dieser Ansätze hindurchragen und von der Aussenseite dieses Lagerschildes her fixiert sind.

Auf diese Weise ist erreicht, dass die die beiden Schenkel des Statorblechpaketes je an ihrer Aussenseite umfassenden erstgenannten zwei Ansätze und der Quersteg des mit dem dritten Ansatz verbundenen T-förmigen Steges, an welchem das Joch des Statorblechpaketes von der Innenseite her anliegt, für eine entsprechende Positionierung des Statorblechpaketes Sorge tragen, so dass nach dem Einsetzen des Statorblechpaketes und des Läufers in das mit den Ansätzen versehene Lagerschild nur mehr das zweite Lagerschild auf die freien Enden der Ansätze aufzusetzen ist, wonach bereits die freien Enden dieser Ansätze von der Aussenseite dieses zweiten Lagerschildes her fixiert werden können, beispielsweise durch Verschweissen, Vernieten, Verbiegen oder dergleichen. Wie ersichtlich, gestaltet sich eine solche Montage besonders einfach, wobei keine zusätzlichen Teile benötigt werden. Dadurch, dass das eine Lagerschild mit mindestens drei Ansätzen versehen ist, welche in der angeführten Weise angeordnet sind, wird ausserdem eine gute Stabilität der gesamten Baueinheit erhalten. Ein weiterer Vorteil besteht darin, dass ein solcher Motor auch einfach für verschiedene Leistungen ausgelegt werden kann, da die gleichen Lagerschilde auch zur Montage von in axialer Richtung gesehen unterschiedlich hohen Statorblechpaketen und Läufern verwendet werden können.

Als vorteilhaft hat es sich erwiesen, wenn mindestens ein Ansatz mindestens eine in Längsrichtung desselben verlaufende Versteifungsrippe aufweist. Auf diese Weise wird dem Ansatz bzw. den Ansätzen und damit auch der gesamten Baueinheit besondere Stabilität verliehen.

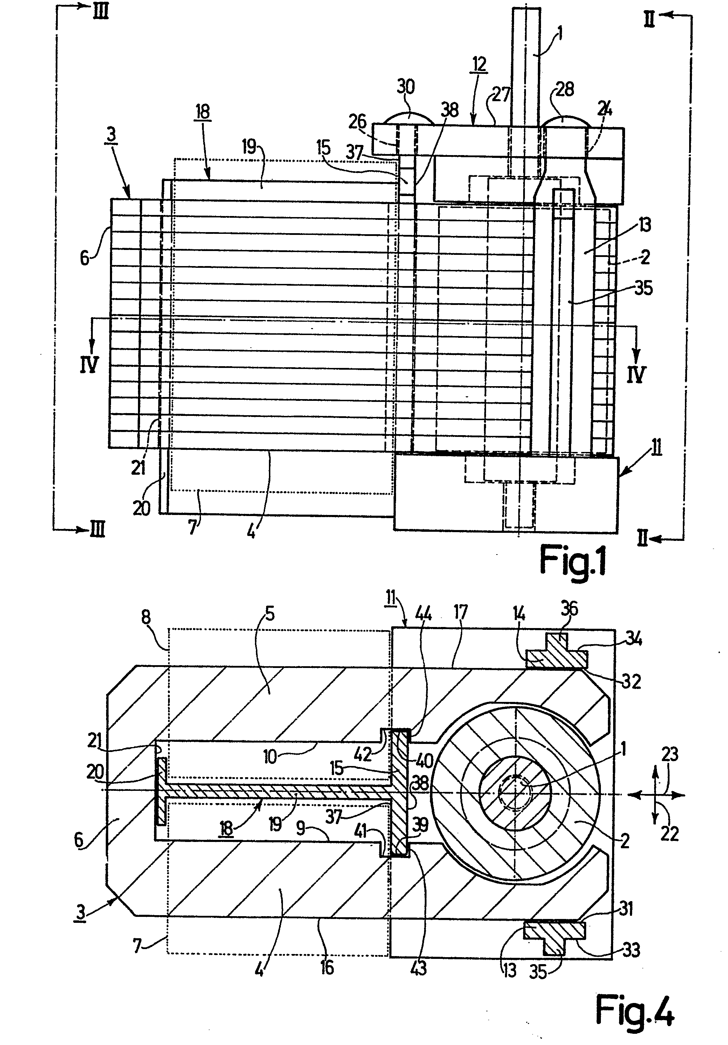

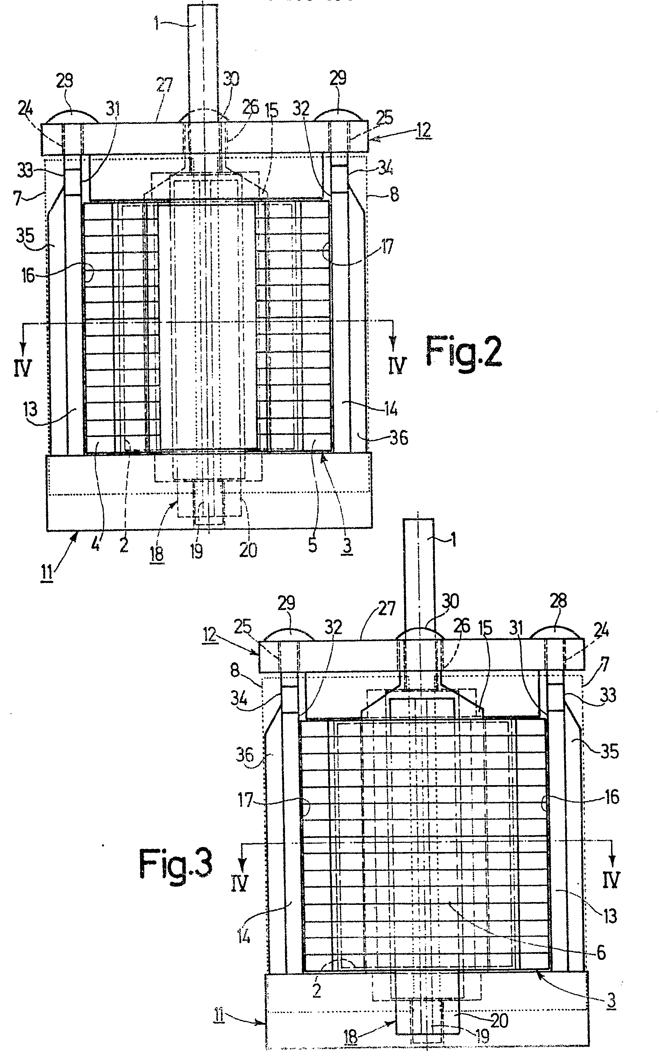

Die Erfindung wird im folgenden anhand der Zeichnungen, in welchen ein Ausführungsbeispiel der Erfindung dargestellt ist, auf das sie jedoch nicht beschränkt sein soll, näher erläutert. Fig. 1 zeigt in Seitenansicht einen Elektromotor, bei dem ein Lagerschild mit drei Ansätzen versehen ist. Fig. 2 zeigt eine Ansicht des Motors nach Fig. 1 gemäss der Linie II-II in Fig. 1. Fig. 3 zeigt eine Ansicht des Motors nach Fig. 1 gemäss der Linie III-III in Fig. 1. Fig. 4 zeigt einen Schnitt durch den Motor nach Fig. 1 gemäss der Linie IV-IV in Fig. 1.

Der in den Figuren dargestellte Elektromotor weist eine Motorwelle 1 auf, auf der ein Läufer 2 sitzt, der mit einem Statorblechpaket 3 zusammenwirkt, das U-förmig ausgebildet ist und aus zwei Schenkeln 4 und 5 und einem diese beiden Schenkel verbindenden Joch 6 besteht. Jeder Schenkel 4 bzw. 5 trägt eine Erregerwicklung 7 bzw. 8, die der übersichtlichkeit halber nur durch einfache Rechtecke angedeutet sind. Die Innenseiten 9 und 10 der beiden Schenkel 4 und 5 sind im Bereich ihrer freien Enden zu Polschuhen geformt, die den Läufer 2 unter Bildung von Luftspalten abschnittsweise umfassen. Zur Montage des Motors dienen zwei Lagerschilde 11 und 12, in welchen die Motorwelle 1 gelagert ist und die die Lage des Läufers 2 zum Statorblechpaket 3 festlegen, wobei eine Baueinheit gebildet wird, wie dies noch im folgenden beschrieben wird. Ein solcher Motor kann beispielsweise als zweipoliger Einphasensynchronmotor mit diametral magnetisiertem dauermagnetischem Läufer ausgebildet sein, wie er in grossen Stückzahlen als Antriebseinrichtung für kleine Haushaltsgeräte, wie Zitruspressen, Dosenöffner und dergleichen vielfach verwendet wird. Ein solcher Motor kann aber auch nach einem anderen Wirkungsprinzip arbeiten, beispielsweise als Hysteresemotor, wie dies allgemein bekannt ist.

Für eine besonders einfache Montage eines solchen Motors ist nun vorgesehen, dass ein Lagerschild, im vorliegenden Fall das Lagerschild 11, mit drei schwertförmigen, senkrecht zum Lagerschild verlaufenden Ansätzen 13, 14 und 15 versehen ist, wobei zwei dieser Ansätze 13 und 14, die in bezug auf die Motorwelle 1 im wesentlichen einander gegenüberliegend angeordnet sind, die beiden Schenkel 4 und 5 des Statorblechpaketes 3 je an ihrer Aussenseite 16 bzw. 17 umfassen und der dritte Ansatz 15 zwischen den beiden Schenkeln 4 und 5 des Statorblechpaketes 3 im Bereich neben dem Läufer 2 angeordnet ist. Weiters ist vorgesehen, dass mit dem dritten Ansatz 15 ein T-förmiger Steg 18 verbunden ist, der mit seinem Längssteg 19 von diesem dritten Ansatz 15 auskragend zwischen den Erregerwicklungen 7 und 8 verläuft und mit seinem Quersteg 20 an die beiden Schenkel 4 und 5 verbindenden Joch 6 des Statorblechpaketes 3 von der Innenseite 21 her anliegt. Somit legen die Ansätze 13 und 14 und der Quersteg 20 am Lagerschild 11 einen Aufnahmeraum für das Statorblechpaket 3 fest, in den das mit den Erregerwicklungen 7 und 8 versehene Statorbleckpaket einsetzbar ist, wobei dann dessen Joch 6 zum Anliegen an dem Quersteg 20 gebracht wird. Auf diese Weise erfolgt eine Positionierung des Statorblechpaketes 3, welche dessen Lage gegenüber dem Läufer 2 festlegt, wenn derselbe mit seiner Welle 1 ebenfalls in das Lagerschild 11 eingesetzt ist. Wie ersichtlich, sorgen dabei die Ansätze 13 und 14 für eine Positionierung in Richtung quer zur Längsstreckung der Schenkel 4 und 5, wie dies in Fig. 4 durch den Doppelpfeil 22 angegeben ist und sorgt der Quersteg 20 für eine Positionierung in Richtung der Längserstreckung der Schenkel 4 und 5, wie dies in Fig. 4 durch den Pfeil 23 angegeben ist.

Das zweite Lagerschild 12 ist mit zu den schwertförmigen Ansätzen 13, 14 und 15 korrespondierenden Öffnungen 24, 25 und 26 vorgesehen, so dass es auf die freien Enden dieser Ansätze aufsetzbar ist, wobei dann diese freien Enden durch die Öffnungen 24, 25 und 26 hindurchragen und über die Aussenseite 27 dieses Lagerschildes 12 vorstehen. Bei einem solchen Aufsetzen des Lagerschildes 12 auf die Ansätze 13, 14 und 15 des Lagerschildes 11 wird natürlich auch die Motorwelle 1 in das Lager dieses Lagerschildes 12 eingeführt. Zur Vervollständigung der Montage des Motors ist es dann nur mehr notwendig, die aus dem Lagerschild 12 hervorragenden freien Enden der Ansätze 13, 14 und 15 von der Aussenseite 27 dieses Lagerschildes 12 her zu fixieren, was auf einfache Weise durch eine entsprechende Verformung dieser freien Enden geschehen kann. Da solche Lagerschilde einfach und zweckmässig als einstückige Kunststoffteile ausgebildet werden können, kann in einem solchen Fall die vorgenannte Verformung einfach durch einen Ultraschall-Schweissvorgang erfolgen, durch welchen die aus den Öffnungen 24, 25 und 26 herausragenden freien Enden der Ansätze 13, 14 und 15 zu Köpfen 28, 29 und 30 geformt werden, die sich an der Aussenseite 27 des Lagerschildes 12 abstützen und dadurch die gesamte Baueinheit zusammenhalten. Handelt es sich bei den Ansätzen aber um Metallteile, so kann die Verformung durch Vernieten oder Umbiegen vorgenommen werden. Es wäre natürlich auch möglich, die freien Enden dieser Ansätze 13, 14 und 15 auf andere Art und Weise zu fixieren, beispielsweise dadurch, dass an den freien Enden dieser Ansätze Klemmteile angebracht werden oder andere im Rahmen des bekannten Standes der Technik zur Verfügung stehende Fixiermittel bzw. Fixiermassnahmen herangezogen werden.

Wie ersichtlich, gestaltet sich eine solche Montage des Motors besonders einfach und kann auch voll mechanisiert durchgeführt werden, so dass ein derart aufgebauter Motor für eine Serienfabrikation in grossen Stückzahlen sehr gut geeignet ist.

Beim vorliegenden Ausführungsbeispiel sind noch weitere Massnahmen getroffen, um eine besonders exakte und sichere Positionierung des Statorblechpaketes und eine besonders gute Stabilität der gesamten Baueinheit zu erreichen.

Hierzu ist vorgesehen, dass die die Schenkel 4 und 5 des Statorblechpaketes 3 an deren Aussenseite 16 bzw. 17 umfassenden Ansätze 13 und 14 mit einer Breitseite 31 bzw. 32 an den Schenkeln des Statorblechpaketes anliegen, wie die Fig. 4 deutlich erkennen lässt. Weiter sind die die Schenkel 4 und 5 des Statorblechpaketes an deren Aussenseite 16 bzw. 17 umfassenden Ansätze 13 und 14 an ihrer anderen von den Schenkeln des Statorblechpaketes abgewandten Breitseite 33 bzw. 34 mit einer in Längsrichtung der Ansätze verlaufenden Versteifungsrippe 35 bzw. 36 versehen. Beim vorliegenden Ausführungsbeispiel reichen diese Versteifungsrippen 35 bzw. 36 nur über einen gewissen Abschnitt der Längserstreckung dieser Ansätze 13 und 14, wie den Figuren zu entnehmen ist. Natürlich wäre es auch möglich, diese Rippen bis zu den freien Enden der Ansätze verlaufen zu lassen, in welchem Falle dann den Öffnungen 24 und 25 im Lagerschild 12 wieder eine zu den Querschnitten der Ansätze korrespondierende Form zu geben ist, damit die freien Enden der Ansätze durch die Öffnungen hindurchtreten können. Auf diese Weise ist erreicht, dass die Ansätzen 13 und 14 einerseits die Schenkel 4 und 5 des Statorblechpaketes 3 breitflächig und damit gut formschlüssig umfassen und andererseits entsprechend stabil sind. Falls erwünscht, könnte natürlich auch der Ansatz 15 mit einer zusätzlichen Versteifungsrippe versehen werden, um seine Stabilität noch zu erhöhen.

Weiter ist vorgesehen, dass der Ansatz 15 in bezug auf seine Breitseiten 37 und 38 quer zur Längserstreckung der beiden Schenkel 4 und 5 des Statorblechpaketes 3 verläuft, wobei der Längssteg 19 des T-förmigen Steges 18 von der vom Läufer 2 abgewandten Breitseite 37 auskragt. Dadurch verläuft der Ansatz 15 im rechten Winkel zu den beiden anderen Ansätzen 13 und 14, was ebenfalls die Stabilität der gesamten Baueinheit verbessert. An sich wäre es aber auch möglich, den Steg 15 gleich orientiert wie die Ansätze 13 und 14 vorzusehen, wobei dann der Längssteg 19 des T-förmigen Steges von der vom Läufer abgewandten Schmalseite des Ansatzes 15 auskragen würde. Wie insbesondere aus Fig. 4 ersichtlich ist, ist weiter vorgesehen, dass der Ansatz 15 mit seinen beiden Schmalseiten 39 und 40 in je eine am benachbarten Schenkel 4 bzw. 5 des Statorblechpaketes 3 vorgesehene, korrespondierende Nut 41 bzw. 42 ragt, wobei seine dem Läufer 2 zugewandte Breitseite 38 an den ihr benachbarten Seitenwänden 43 bzw. 44 der Nuten 41 und 42 anliegt. Ausserdem ist vorgesehen, dass der Ansatz 15 mit seinen beiden Schmalseiten 39 und 40 je am benachbarten Schenkel 4 bzw. 5 des Statorblechpaketes von deren Innenseite 9 bzw. 10 her anliegt, wozu im vorliegenden Fall die Schmalseiten 39 bzw. 40 des Ansatzes 15 je am Grund der Nuten 41 bzw. 42 anliegen.

Auf diese Weise ist erreicht, dass der Ansatz 15 in zweifacher Weise mit an der Positionierung des Statorblechpaketes 3 beteiligt ist. Einerseits wird nämlich durch ein Zusammenwirken des Ansatzes 15 mit dem Quersteg 20 des T-förmigen Steges 18 eine Positionierung des Statorblechpaketes 3 in Richtung des Doppelpfeiles 23 erreicht, weil der Ansatz 15 mit seiner Breitseite 38 an den Seitenwänden 43 und 44 der Nuten 41 und 42 und der Quersteg 20 an der Innenseite 21 des Joches 6 anliegt. Andererseits wird durch ein Zusammenwirken des Ansatzes 15 mit den die beiden Schenkel 4 und 5 des Statorblechpaketes 3 je an ihrer Aussenseite 16 bzw. 17 umfassenden Ansätzen 13 und 14 eine zusätzliche Positionierung des Statorblechpaketes 3 in Richtung des Doppelpfeiles 22 erreicht, weil die Ansätze 13 und 14 an den Aussenseiten 16 bzw. 17 der beiden Schenkel 4 und 5 und die Schmalseiten 39 und 40 des Ansatzes 15 je am Grund der Nuten 41 und 42 von den Innenseiten 9 bzw. 10 her an den Schenkeln 4 und 5 anliegen. Auf diese Weise wird eine besonders exakte und sichere Positionierung des Statorblechpaketes 3 erhalten. Selbstverständlich sind dabei alle an der Positionierung beteiligten Bauteile bezüglich ihrer Dimensionierung so aufeinander abzustimmen, dass es zu keiner überbestimmung hinsichtlich der Lage des Statorblechpaketes kommt und das Statorblechpaket leicht und ohne Klemmen auf das Lagerschild 11 aufsetzbar ist. Es ist natürlich nicht zwingend notwendig, dass beide vorstehend in bezug auf den Ansatz 15 angeführten Positionierungsmassnahmen gemeinsam angewendet werden, sondern es könnte auch nur die in der einen Richtung oder nur die in der anderen Richtung wirksame Positionierungsmassnahme je für sich alleine vorgesehen sein, was sich ganz nach den jeweils vorliegenden Gegebenheiten richten kann.

Schliesslich ist beim vorliegenden Ausführungsbeispiel noch vorgesehen, dass die beiden Erregerwicklungen 7 und 8 passend zwischen dem Ansatz 15 und dem Quersteg 20 des mit dem Ansatz 15 verbundenen T-förmigen Steges 18 aufgenommen sind, wie dies insbesondere aus Fig. 4 ersichtlich ist. Hierdurch wird auf einfache Weise ohne zusätzliche Mittel auch eine Positionierung bzw. Lagesicherung der Erregerwicklungen 7 und 8 erreicht. Die Erregerwicklungen können dabei entweder als freitragende Spulen oder auch als auf Spulenkörpern untergebrachte Spulen ausgebildet sein. Zum Anschluss der Erregerwicklungen 7 und 8 an die Speisespannung des Motors kann eines der beiden Lagerschilde 11 oder 12 mit entsprechenden Anschlussklemmen versehen werden, was hier nicht näher dargestellt ist. Hierzu kann auch am T-förmigen Steg 18, beispielsweise an dessen Quersteg 20, eine entsprechende Leiste als Träger für die Anschlussklemmen angeformt sein.

Wie aus vorstehendem ersichtlich ist, gibt es eine Reihe von Abwandlungen des beschriebenen Ausführungsbeispieles, ohne dass dabei der Rahmen der Erfindung verlassen wird. Dies gilt insbesondere für die Ausbildung und Anordnung der schwertförmigen Ansätze 13, 14 und 15 am Lagerschild 11. So können beispielsweise auch mehr als drei solcher Ansätze vorgesehen sein. Beispielsweise kann ein weiterer dem Ansatz 15 in bezug auf die Motorwelle 1 gegenüberliegender Ansatz vorgesehen sein. Es können aber auch zusätzlich zu den Ansätzen 13 und 14 je zwei weitere Ansätze vorgesehen sein, welche ebenfalls die beiden Schenkel des Statorblechpaketes je an ihrer Aussenseite umfassen. Hinsichtlich der Ausbildung der Ansätze ist zu erwähnen, dass für die Wahl ihrer Querschnittsform verschiedene Möglichkeiten bestehen, mit welchen auch ihre Stabilität beeinflusst werden kann. So kann ihre Querschnittsform beispielsweise auch U-förmig oder halbkreisförmig gewählt werden.

**Patentansprüche**

1. Elektromotor mit einem U-förmigen Statorblechpaket (3), dessen beide Schenkel (4, 5) je eine Erregerwicklung (7, 8) tragen, einem auf einer Motorwelle (1) sitzenden Läufer (2) und zwei Lagerschilden (11, 12), die zur Lagerung der Motorwelle und als Montageeinrichtungen für den Motor vorgesehen sind, mit einem Lagerschild (11), das mit mindestens drei schwertförmigen, senkrecht zum Lagerschild verlaufenden Ansätzen (13, 14, 15) versehen ist, wobei mindestens zwei Ansätze (13, 14), in bezug auf die Motorwelle im wesentlichen einander gegenüberliegend angeordnet sind und ein dritter Ansatz (15) zwischen den beiden Schenkeln (4, 5) des Statorblechpaketes (3) im Bereich neben dem Läufer (2) angeordnet ist und in bezug auf seine Breitseiten quer zur Längserstreckung der beiden Schenkel (4, 5) des Statorblechpaketes (3) verläuft, wobei ferner mit dem dritten Ansatz (15) ein T-förmiger Steg (18) verbunden ist, der mit seinem Längssteg (19) von der vom Läufer (2) abgewandten Breitseite des dritten Ansatzes auskragend zwischen den Erregerwicklungen (7, 8) verläuft und mit seinem Quersteg (20) am die beiden Schenkel verbindenden Joch (6) des Statorblechpaketes (3) von der Innenseite her anliegt und wobei der dritte Ansatz mit seinen beiden Schmalseiten (39, 40) je am benachbarten Schenkel (4, 5) des Statorblechpaketes (3) von der Innenseite her anliegt, dadurch gekennzeichnet, dass die beiden erstgenannten Ansätze (13, 14) die Schenkel (4, 5) des Statorblechpaketes (3) an deren Aussenseite (16, 17) umfassen und mit einer Breitseite (33, 34) an den Schenkel (4, 5) des Statorblechpaketes (3) anliegen und das zweite Lagerschild (12) mit zu den Ansätzen (13, 14, 15) korrespondierenden Öffnungen (24, 25, 26) versehen ist, durch welche die freien Enden dieser Ansätze hindurchragen und von der Aussenseite (27) dieses Lagerschildes (12) her fixiert sind.

2. Elektromotor nach Anspruch 1, dadurch gekennzeichnet, dass mindestens ein Ansatz (13, 14, 15) mindestens eine in der Längsrichtung desselben verlaufende Versteifungsrippe (35, 36) aufweist.

**Claims**

1. An electric motor comprising an U-shaped laminated statorcore (3), whose to limbs (4, 5) each carry an exciter winding (7, 8), a rotor (2) mounted on a motor shaft (11), and two bearing shields (11, 12) by means of which the motor shaft is journalled and which serve as mounting devices for the motor, of which one bearing shield (11) is provided with at least three sword-shaped projections (13, 14, 15) which extend perpendicularly to the bearing shield, at least two projections (13, 14) being arranged substantially opposite each other relative to the motor shaft, a third projection (15) being arranged between the two limbs (4, 5) of the laminated stator-core (3) at a location adjacent the rotor (2), and further the third projection (15) being connected to a T-shaped member whose longitudinal limb (19) extends from the broad side of the third projection which is remote from the rotor (1) between the exciter windings (7, 8) and whose transverse limb (20) is positioned from the inner side against the yoke (6) which interconnects the two limbs of the laminated stator-core (3) and the two narrow sides (39, 40) of the third projection being each positioned against the adjacent limb (4, 5) of the laminated stator-core (3) from the inner side, characterized in that two first-mentioned projections (13, 14) enclose the outer sides (16, 17) of the limbs (4, 5) of the laminated stator-core (3) and engage the limbs (4, 5) of said core (3) with a broad side (33, 34) and in that the second bearing its broad sides extending transversely of the longitudinal axis of the two limbs (4, 5) of the laminated stator-core (3) shield (12) is formed with openings (24, 25, 26) corresponding to the projections (13, 14, 15), through which openings the free ends of said projections extend and are secured from the outer side (27) of said bearing shield (12).

2. An electric motor as claimed in Claim 1, characterized in that at least one projection (13, 14, 15) comprises at least one reinforcement rib (35, 36) which extends in the longitudinal direction of said projection.

**Revendications**

1. Moteur électrique muni d'un noyau feuilleté de stator en U (3) dont les deux ailes (4, 5) portent chacune un enroulement d'excitation (7, 8), d'un rotor (2) placé sur un arbre de moteur (1) et de deux flasques (11, 12) servant à loger l'arbre de moteur et faisant fonction de dispositifs de montage du moteur, flasques, dont le premier (11) présente au moins trois éléments ensiformes (13, 14, 15) s'étendant perpendiculairement à ce flasque, au moins deux éléments ensiformes (13, 14) étant disposés sensiblement face à face par rapport à l'arbre de moteur, alors qu'un troisième élément ensiforme (15) est disposé entre les deux ailes (4, 5) du noyau feuilleté de stator (3), à côté du rotor (2), que les côtés larges de ce troisième élément ensiforme (15) s'étendent perpendiculairement au sens longitudinal des deux ailes (4, 5) du noyau feuilleté de stator (3) et qu'à ce troisième élément ensiforme (15) est réuni un élément en T (18) dont l'âme (19) s'étend entre les enroulements d'excitation (7, 8) en saillissant du côté large de troisième élément uniforme situé à l'opposé du rotor (2) et dont l'aile (20) est appliquée contre la face intérieure de la culasse (6) du noyau feuilleté de stator (3), culasse qui réunit les deux ailes de celui-ci, et que les deux côtés étroits (39, 40) du troisième élément ensiforme sont appliqués chacun sur la face intérieure de l'aile voisine (4, 5) du noyau feuilleté de stator (3), caractérisé en ce que les deux éléments ensiformes (13, 14) cités en premier lieu tiennent embrassées les ailes (4, 5) du noyau feuilleté de stator (3) sur leurs faces extérieures (16, 17) et sont appliqués par un côté large (33, 34) contre les ailes (4, 5) du noyau feuilleté de stator (3) et en ce que le second flasque (12) présente des ouvertures (24, 25, 26) correspondant aux éléments ensiformes (13, 14, 15), ouvertures à travers lesquelles passent les extrémités libres de ces éléments pour être fixées à partir de la face extérieure (27) de ce flasque (12).

2. Moteur électrique selon la revendication 1, caractérisé en ce qu'au moins un élément ensiforme (13, 14, 15) présente au moins une nervure raidisseuse (35, 36) s'étendant dans son sens longitudinal.

0 108 434

Fig.1

Fig.4

0 108 434

Fig.2

Fig.3

2